# EUROPEAN PATENT APPLICATION

(11) **EP 4 682 850 A1**
(43) Date of publication of application: **21.01.2026**
(21) Application number: 25182916.4
(22) Date of filing: 16.06.2025
(51) Int. Cl.: G08B 17/12, G08B 29/18, G01J 5/00

(54) **OPTICAL ACCESSORY, SYSTEM, AND METHOD FOR TRAINING A FLAME DETECTOR**

(30) Priority: 19.07.2024 IN 202411055258
(71) Applicant: Life Safety Distribution GmbH, 1180 Rolle (CH)
(72) Inventor: KOTHARI, Sanjay, Charlotte, 28202 (US); HANAGANDI, Sheetal, Charlotte, 28202 (US); R, Ranjith, Charlotte, 28202 (US)
(74) Representative: Haseltine Lake Kempner LLP

(57) **Abstract**

An optical accessory (104) for training a flame detector (102) is disclosed. The optical accessory comprises a body (202) defining a first opening (204) and a second opening (206), the first opening and the second opening being positioned at opposite ends of body. Further, a plurality of reflector plates (208) positioned within and moveably coupled to the body, each reflector plate being configured to move from a first orientation (214) to a second orientation (216) relative to the body. When each reflector plate is positioned in the first orientation, the plurality of reflector plates are configured to receive infrared waves (226) from the first opening of the body and reflect the infrared waves towards the second opening of the body. And when each reflector plate is positioned in the second orientation, the plurality of reflector plates are configured to allow infrared waves to travel along a linear path from the first opening to the second opening of the body.

## Description

### TECHNOLOGICAL FIELD

Example embodiments of the present disclosure generally relates to a flame detector, and more particularly relates to an apparatus, a system, and a method for training the flame detector.

### BACKGROUND

**In** an industrial landscape, the demand for advanced safety measures for fires has led to the development of various flame detection systems. The flame detection systems detect and alert the presence of fires or flammable gases in industries, thereby mitigating potential hazards and ensuring the safety of personnel and assets. In industrial applications, known flames can sometimes exist in the field of view of the flame detection systems. The infrared energy emitted by these known flames sometimes reflect from shiny objects within the field of view, which may cause a false alarm, which is undesirable.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, an optical accessory for training a flame detector is disclosed. The optical accessory comprises a body defining a first opening and a second opening, the first opening and the second opening being positioned at opposite ends of the body. Further, the optical accessory comprises a plurality of reflector plates positioned within and moveably coupled to the body, each reflector plate being configured to move from a first orientation to a second orientation relative to the body. When each reflector plate is positioned in the first orientation, the plurality of reflector plates are configured to receive infrared waves from the first opening of the body and reflect the infrared waves towards the second opening of the body. When each reflector plate is positioned in the second orientation, the plurality of reflector plates are configured to allow infrared waves to travel along a linear path from the first opening to the second opening of the body.

In some embodiments, the body of the optical accessory has a conical shape, a cylindrical shape, or a frustum shape.

In some embodiments, the optical accessory further comprising at least one switch. The at least one switch is configured to toggle the plurality of reflector plates between the first orientation and the second orientation. In some embodiments, the at least one switch corresponds to at least one of a mechanical switch or an electrical switch.

In another example embodiment, a system for training a flame detector is disclosed. The system comprises an optical accessory mounted onto the flame detector. The optical accessory comprising a body defining a first opening and a second opening, the first opening and the second opening being positioned at opposite ends of the body. Further, the optical accessory comprising a plurality of reflector plates positioned within and moveably coupled to the body, each reflector plate being configured to move from a first orientation to a second orientation relative to the body. When each reflector plate is positioned in the first orientation, the plurality of reflector plates are configured to receive infrared waves from the first opening of the body and reflect the infrared waves towards the second opening of the body and towards the flame detector. When each reflector plate is positioned in the second orientation, the plurality of reflector plates are configured to allow infrared waves to travel along a linear path from the first opening to the second opening of the body and to the flame detector. Further, the system comprises at least one processor communicatively coupled to the flame detector. The at least one processor is configured to train the flame detector using (i) a first set of data indicative of the infrared waves that are received by the flame detector after being reflected from the plurality of reflector plates and (ii) a second set of data indicative of the infrared waves that are received by the flame detector after traveling along the linear path.

In some embodiments, the at least one processor is configured to train the flame detector using a machine learning (ML) model having one or more parameters based at least on the first set of data and the second set of data.

In some embodiments, the one or more parameters comprise at least one of amplitudes, ratio, power spectral density, ratio of the power spectral density, rise time, fall time, ratios of the rise time and the fall time, growing/quenching patterns, peaks, troughs, moving average, symmetry, lack of symmetry around centre of distribution of the infrared waves, heavy tailed or light tailed relative to a normal distribution of the infrared waves.

In some embodiments, the at least one processor is further configured to determine a presence of an unfriendly flame or an absence of an unfriendly flame within a field of view of the flame detector.

In some embodiments, the body of the optical accessory has a tubular shape. The tubular shape is a conical shape, a cylindrical shape, or a frustum shape.

In yet another example embodiment, a method for training a flame detector is disclosed. The method comprises aiming the flame detector towards a field of view having one or more friendly flames. Further, the method comprises mounting an optical accessory onto the flame detector, wherein the flame detector comprises a plurality of reflector plates that are each configured to move from a first orientation to a second orientation. Furthermore, the method comprises aiming the optical accessory towards one of the one or more friendly flames. When each reflector plate is positioned in the first orientation, the plurality of reflector plates are configured to receive infrared waves from the one of the one or more friendly flames and reflect the infrared waves towards the flame detector. When each reflector plate is positioned in the second orientation, the plurality of reflector plates are configured to allow infrared waves from the one of the one or more friendly flames to travel along a linear path to the flame detector. Thereafter, the method comprises training, via at least one processor communicatively coupled to the flame detector, the flame detector using (i) a first set of data indicative of the infrared waves that are received by the flame detector after being reflected from the plurality of reflector plates and (ii) a second set of data indicative of the infrared waves that are received by the flame detector after traveling along the linear path.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a system for training a flame detector in accordance with an example embodiment of the present disclosure;
FIG. 2 illustrates a schematic, perspective view of an optical accessory for training the flame detector in accordance with an example embodiment of the present disclosure;
FIG. 3A illustrates a flowchart showing a method of a training mode of the optical accessory in accordance with an example embodiment of the present disclosure;
FIG. 3B illustrates a flowchart showing a method of a monitoring mode of the system in accordance with an example embodiment of the present disclosure; and
FIG. 4 illustrates a flowchart showing a method of the system for training the flame detector, in accordance with an example embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of an optical accessory, a system, and a method for training a flame detector. Embodiments may comprise the optical accessory mounted onto the flame detector. Embodiments may comprise a body defining a first opening and a second opening, the first opening and the second opening being positioned at opposite ends of the body. Embodiments may comprise a plurality of reflector plates positioned within and moveably coupled to the body, each reflector plate being configured to move from a first orientation to a second orientation relative to the body. In various embodiments, when each reflector plate is positioned in the first orientation, the plurality of reflector plates may be configured to receive infrared waves from the first opening of the body and reflect the infrared waves towards the second opening of the body. In various embodiments, when each reflector plate is positioned in the second orientation, the plurality of reflector plates may be configured to allow infrared waves to travel along a linear path from the first opening to the second opening of the body. Embodiments may comprise at least one processor communicatively coupled to the flame detector. Embodiments may be configured to train the flame detector using a first set of data indicative of the infrared waves that are received by the flame detector after being reflected from the plurality of reflector plates and a second set of data indicative of the infrared waves that are received by the flame detector after traveling along the linear path.

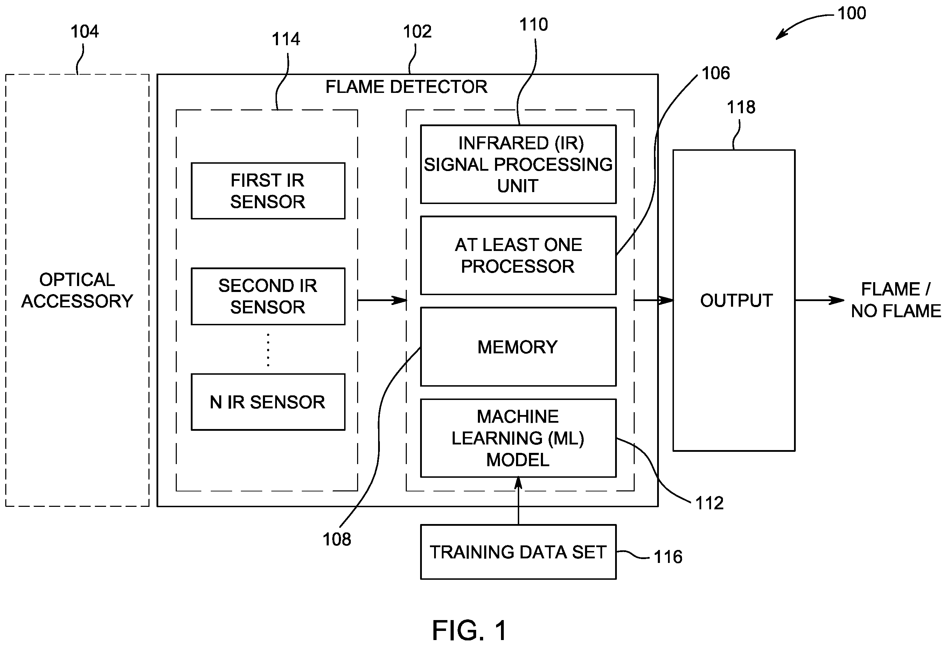

FIG. 1 illustrates a block diagram of a system 100 for training a flame detector 102, in accordance with an example embodiment of the present disclosure. The system 100 may comprise an optical accessory 104. Further, the flame detector 102 may comprise at least one processor 106, a memory 108, an infrared (IR) signal processing unit 110, and a machine learning (ML) model 112.

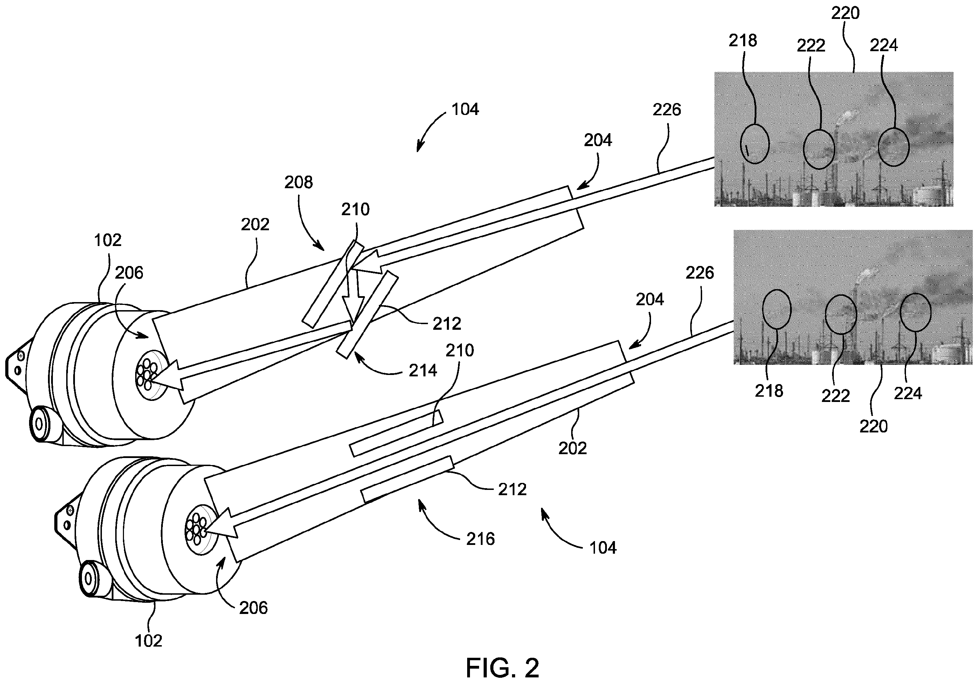

In some embodiments, the optical accessory 104 is mounted onto the flame detector 102. In some embodiments, the optical accessory 104 is positioned proximate to the flame detector 102 but spaced from the flame detector 102. In some embodiments, the optical accessory 104 is positioned proximate to the flame detector 102 such that the optical accessory 104 makes contact with the flame detector. The optical accessory 104 may comprise a body 202 (FIG. 2) defining a first opening 204 (FIG. 2) and a second opening 206 (FIG. 2). In some embodiments, the body 202 of the optical accessory 104 may comprise a tubular shape. Further, the tubular shape may correspond to a conical shape, a cylindrical shape, or a frustum shape. The first opening 204 and the second opening 206 may be positioned at opposite ends of the body 202. Further, the optical accessory 104 may comprise a plurality of reflector plates 208(FIG. 2). The plurality of reflector plates 208 may be positioned within and moveably coupled to the body 202. Each reflector plate from the plurality of reflector plates 208 may be configured to move from a first orientation 214 (FIG. 2), as depicted in the top image of FIG. 2, to a second orientation 216 (FIG. 2), as depicted in the bottom image of FIG. 2, relative to the body 202. Each reflector plate from the plurality of reflector plates 208 may comprise a reflective material, such as silver, aluminum, stainless steel, or the like.

In some embodiments, when each reflector plate is positioned in the first orientation, the plurality of reflector plates 208 may be configured to receive infrared (IR) waves 226 (FIG. 2) from the first opening 204 of the body 202. Thereafter, the plurality of reflector plates 208 may be configured to reflect the IR waves 226 towards the second opening 206 of the body 202 and towards the flame detector 102. For example, the IR waves 226 may enter the first opening 204 and travel towards a first reflector plate 210 (FIG. 2) and subsequently be reflected from the first reflector plate 210 towards a second reflector plate 212 (FIG. 2), and subsequently be reflected from the second reflector plate 212 towards the second opening 206 of the body 202, as depicted in the top image of FIG. 2. In one example, the IR waves 226 reflected towards the second opening 206 may correspond to reflected IR waves 226.

In some embodiments, when each reflector plate is positioned in the second orientation 216, the plurality of reflector plates 208 may be configured to allow the IR waves 226 to travel along a linear path from the first opening 204 to the second opening 206 of the body 202 and to the flame detector 102, as depicted in the bottom image of FIG. 2. In one example, the IR waves 226 travelling along the linear path may correspond to direct IR waves 226.

In some embodiments, the optical accessory 104 may further comprise at least one switch (not shown). The at least one switch may be configured to toggle the plurality of reflector plates 208 between the first orientation 214 and the second orientation 216. In one example, the at least one switch may correspond to at least one of a mechanical switch or an electrical switch. The mechanical switch may involve physical mechanisms such as levers, buttons, or dials to manually adjust the plurality of reflector plates 208. The electrical switch may operate through electronic control signals for remote or automated adjustment of the plurality of reflector plates 208.

In some embodiments, the system 100 may comprise the flame detector 102. The flame detector 102 may comprise a plurality of IR sensors 114. The plurality of IR sensors 114 may comprise a first IR sensor, a second IR sensor, and up to "N" IR sensors(s). Each of the plurality of IR sensors 114 may be configured to detect the IR waves 226, comprising the reflected IR waves 226 and the direct IR waves 226, from a monitoring zone (not shown). The monitoring zone may correspond to a zone where hazardous flame could exist, and the existence is desired to be detected. Further, the IR signal processing unit 110 may be configured to process the received IR waves 226. The IR signal processing unit 110 may receive and interpret the infrared waves detected by the plurality of IR sensors 114. Upon receiving the IR waves 226, the IR signal processing unit 110 may convert the IR waves 226 into electrical signals. The electrical signals may further be analyzed and processed to extract meaningful information from the IR waves 226. In some embodiments, the IR signal processing unit 110 may filter out noise, enhance signal clarity from the IR waves 226, while converting the IR waves 226 to the electrical signals. Additionally, the IR signal processing unit 110 may incorporate digital signal processing (DSP) to optimize performance and accuracy, ensuring reliable operation and precise detection and control capabilities in processing of the IR waves 226. As a result, the IR signal processing unit 110 may provide processed IR waves 226 from the monitoring zone. It will be apparent to one skilled in the art that the flame detector 102 may measure thermal radiation or infrared (IR) emissions from the infrared waves, within a field of view (FOV) of the flame detector 102.

In some embodiments, the at least one processor 106 may be communicatively coupled to the flame detector 102. The at least one processor 106 may be configured to receive an output 118 of the IR signal processing unit 110 to determine whether the IR waves 226 corresponds to a flame or not. Simultaneously, the at least one processor 106 may be configured to train the flame detector 102 using a training data set 116. The training data set 116 may comprise a first set of data and a second set of data. The first set of data may be indicative of the IR waves 226 that are received by the flame detector 102 after being reflected from the plurality of reflector plates 208, i.e., the reflected IR waves 226. The second set of data may be indicative of the IR waves 226 that are received by the flame detector 102 after traveling along the linear path i.e., the direct IR waves 226.

In some embodiments, the at least one processor 106 may be configured to train the flame detector 102 using the ML model 112. The ML model 112 may comprise one or more parameters based at least on the first set of data and the second set of data. Further, the one or more parameters may comprise at least one of amplitudes, ratio, power spectral density, ratio of the power spectral density, rise time, fall time, ratios of the rise time and the fall time, growing/quenching patterns, peaks, troughs, moving average, symmetry, lack of symmetry around centre of distribution of the infrared waves, heavy tailed or light tailed relative to a normal distribution of the infrared waves. The ML model 112 may classify the training data set based on the one or more parameters of the ML model and threshold of the ML model. The threshold of the ML model may determine a decision boundary for classifying the first set of data and the second set of data from the flame detector, ensuring that IR waves 226 meeting or exceeding the threshold are classified as presence or absence of unfriendly of flames. Thereafter, the at least one processor 106 may be configured to determine the presence of an unfriendly flame or the absence of an unfriendly flame within the FOV of the flame detector 102. The at least one processor 106 may determine the presence or the absence based at least on the training of the flame detector 102 using the ML model 112.

In some embodiments, the at least one processor 106 may include suitable logic, circuitry, and/or interfaces that are operable to execute one or more instructions stored in the memory 108 to perform predetermined operations. In one embodiment, the at least one processor 106 may be configured to decode and execute any instructions received from one or more other electronic devices or server(s). The at least one processor 106 may be configured to execute one or more computer-readable program instructions, such as program instructions to carry out any of the functions described in this description. Further, the at least one processor 106 may be implemented using one or more processor technologies known in the art. Examples of the at least one processor 106 include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

In some embodiments, the memory 108 may be configured to store a set of instructions and data executed by the at least one processor 106. In one example, the memory 108 may correspond to a non-volatile memory 108. Further, the memory 108 may include the one or more instructions that are executable by the at least one processor 106 to perform specific operations. The memory 108 may be configured to include the instructions to train the flame detector 102 using the first set of data indicative of the infrared waves that are received by the flame detector 102 after being reflected from the plurality of reflector plates 208 and the second set of data indicative of the infrared waves that are received by the flame detector 102 after traveling along the linear path. The memory 108 may be configured to include the instructions to train the flame detector 102 using the ML model 112 having one or more parameters based at least on the first set of data and the second set of data. Further, the memory 108 may be configured to include the instructions to determine the presence of the unfriendly flame or the absence of the unfriendly flame within the FOV of the flame detector 102. It is apparent to a person with ordinary skill in the art that the one or more instructions stored in the memory 108 enable the hardware of the flame detector 102 to perform the predetermined operations. Some of the commonly known implementations of the memory 108 include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

The system 100 may further include the output 118. The output 118 may be coupled to the at least one processor 106. The output 118 may generate information on whether the IR waves 226 corresponds to the presence of the unfriendly flame or the absence of the unfriendly flame, based on the output 118 of the IR signal processing unit 110 and the at least one processor 106. The output 118 may generate information on the presence of the unfriendly flame or the absence of the unfriendly flame as flame or no flame, respectively. In one example, the output 118 may generate the presence of unfriendly flames, when the IR signal processing unit 110 determines that the received IR waves 226 corresponds to the flame and the at least one processor 106 determines that the IR received waves corresponds to direct IR waves 226. In another example, the output 118 may generate the absence of the unfriendly flame, when the IR signal processing unit 110 determines that the IR waves 226 corresponds to the flame and the at least one processor 106 determines that the IR waves 226 corresponds to reflected IR waves 226.

In one example embodiment, the output 118 may correspond to a digital output to generate the information in a discrete digital format. The digital output may generate discrete signals like high or low states, indicating binary information such as the presence or absence of the unfriendly flame. The digital output may trigger alarms (digital high) or confirm safety (digital low) based on the system 100 to ensure precise and effective response to fire risks in industrial or commercial settings. In another example embodiment, the output 118 may correspond to an analog output to provide a continuous representation of temperature to enable real-time monitoring and analysis. The analog output may provide a continuous voltage or current signal proportional to the intensity of IR waves 226 detected, indicating the presence or absence of the unfriendly flame based on the direct or reflected IR waves 226.

In various examples, the system 100 may be installed near the monitoring zone. In some embodiments, the monitoring zone may be a fire prone area, like industrial petroleum sites. It will be apparent to one skilled in the art that the fire prone area is an area where fires are most likely to occur or have a higher tendency to occur. In various examples, the fire prone area is an area where fire is expected to exist during normal operations. For example, fire may protrude from flare stacks during normal operation of the flare stacks.

It will be apparent to one skilled in the art that the processing steps may be performed by the at least one processor 106 of the system 100 using the IR signal processing unit 110 and machine learning model without departing from the scope of the disclosure.

It will be apparent that the above-mentioned components of the system 100 have been provided only for illustration purposes. In another embodiment, the system 100 may include other components such as a controller unit, a microprocessor unit (MPU), a microcontroller unit (MCU), etc. without departing from the scope of the disclosure.

FIG. 2 illustrates a schematic, perspective view of the optical accessory 104 for training the flame detector 102, in accordance with an example embodiment of the present disclosure. FIG. 2 is described in conjunction with FIG. 1.

As described in FIG. 1, the optical accessory 104 may be mounted onto the flame detector 102. The optical accessory 104 may be positioned proximate to the flame detector 102 but spaced from the flame detector 102. The optical accessory 104 may be positioned proximate to the flame detector 102 such that the optical accessory 104 makes contact with the flame detector. The optical accessory 104 may comprise the body 202 defining the first opening 204 and the second opening 206. In some embodiments, the body 202 of the optical accessory 104 may comprise a tubular shape. Further, the tubular shape may correspond to a conical shape, a cylindrical shape, or a frustum shape. The first opening 204 and the second opening 206 may be positioned at opposite ends of the body 202.

In some embodiments, the optical accessory 104 may comprise the plurality of reflector plates 208. Further, the plurality of reflector plates may comprise the first reflector plate 210 and the second reflector plate 212. The first reflector plate 210 and the second reflector plate 212 may be positioned within and moveably coupled to the body 202. In some embodiments, the first reflector plate 210 and the second reflector plate 212 may be crafted in one or more shapes that may include at least one of a parabolic reflector, an ellipsoidal reflector, a flat reflector, a corner cube reflector, or a fresnel reflector. In some embodiments, the first reflector plate 210 and the second reflector plate 212 may be arranged in parallel so that the received IR waves may be properly reflected and/or transmitted between the first reflector plate 210 and the second reflector plate 212, as depicted in the top image of FIG. 2.

In some embodiments, the first reflector plate 210 and the second reflector plate 212 may be configured to move from the first orientation 214 to the second orientation 216 relative to the body 202. In some embodiments, when the first reflector plate 210 and the second reflector plate 212 is positioned in the first orientation 214, as depicted in the top image of FIG. 2, the plurality of reflector plates may be configured to receive IR waves 226 from the first opening 204 of the body 202. Herein, the IR waves 226 may be received from a first friendly flame 218 of a zone 220. Thereafter, the plurality of reflector plates may be configured to reflect the IR waves 226 towards the second opening 206 of the body 202 and towards the flame detector 102.

The flame detector 102 may be trained using the reflected IR waves 226 from a plurality of friendly frames. For example, the flame detector 102 may be trained with a plurality of friendly flames by sequentially training the flame detector 102 with each friendly flame individually. For example, the plurality of reflector plates may be configured to receive the reflected IR waves 226 from a second friendly flame 222 followed by being configured to receive IR waves 226 from a third friendly flame 224 of the zone 220. As a result, a first set of data may be generated that is an indicative of the IR waves 226 that are received by the flame detector 102, from the first friendly flame 218, the second friendly flame 222, and the third friendly flame 224 of the zone 220, after being reflected from the plurality of reflector plates, i.e., the reflected IR waves 226. As will become apparent in view of the present disclosure, the reflected IR waves 226 may mimic, or be similar to, IR waves from friendly or known flames that are subsequently reflected from shiny or reflective material within the zone 220, which may undesirably cause a false alarm.

In some embodiments, when the first reflector plate 210 and the second reflector plate 212 is positioned in the second orientation 216, the plurality of reflector plates may be configured to allow IR waves 226 to travel along the linear path from the first opening 204 to the second opening 206 of the body 202 and to the flame detector 102. Herein, the IR waves 226 may be received from the first friendly flame 218 of the zone 220. The flame detector 102 may be trained using the direct IR waves 226 226 from a plurality of friendly frames. For example, the flame detector 102 may be trained with a plurality of friendly flames by sequentially training the flame detector 102 with each friendly flame individually. For example, the system 100 may be configured such that the flame detector 102 receives the direct IR waves 226 226 from the second friendly flame 222 followed by being configured such that the flame detector 102 receives direct IR waves 226 226 from the third friendly flame 224 of the zone 220. As a result, a second set of data may be generated that is an indicative of the IR waves 226 that are received by the flame detector 102, from the first friendly flame 218, the second friendly flame 222, and the third friendly flame 224 of the zone 220, after traveling along the linear path i.e., the direct IR waves 226. As will become apparent in view of the present disclosure, the direct IR waves 226 may mimic, or be similar to, IR waves that are emitted from undesirable or unfriendly flames in the zone 220.

In some embodiments, the at least one processor 106 may be configured to train the flame detector 102 using the training data set 116. The training data set 116 may comprise the first set of data of the reflected IR waves 226 from the first friendly flame 218, the second friendly flame 222, and the third friendly flame 224 of the zone 220, and the second set of data of the direct IR waves 226 from the first friendly flame 218, the second friendly flame 222, and the third friendly flame 224 of the zone 220. In some embodiments, the at least one processor 106 may be configured to train the flame detector 102 using the ML model 112. The ML model 112 may comprise one or more parameters based at least on the first set of data and the second set of data. Thereafter, the at least one processor 106 may be configured to determine presence of an unfriendly flame or an absence of an unfriendly flame in the zone 220, within the FOV of the flame detector 102.

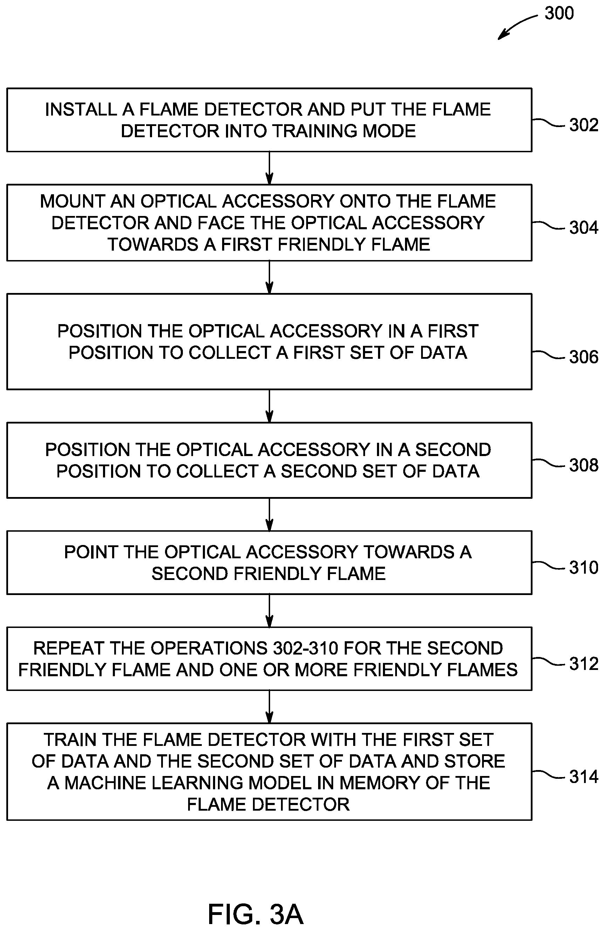

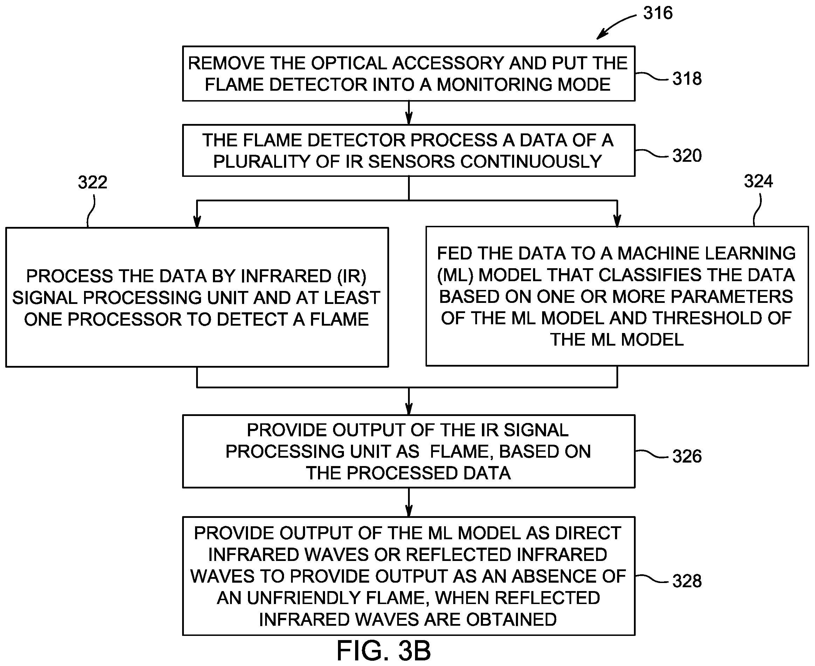

FIG. 3A illustrates a flowchart showing a method 300 of a training mode of the optical accessory 104, in accordance with an example embodiment of the present disclosure. FIG. 3B illustrates a flowchart showing a method 316 of a monitoring mode of the system 100, in accordance with an example embodiment of the present disclosure. FIGS. 3A-3B are described in conjunction with FIGS. 1-2.

Referring to FIG. 3A, the training mode of the flame detector 102 may involve configuring the flame detector 102 to learn and adapt sensitivity thresholds and response parameters based on controlled exposure to one or more friendly flames using the optical accessory 104. At operation 302, the flame detector 102 may be installed and put into the training mode. At operation 304, the optical accessory 104 may be mounted onto or proximate to the flame detector 102 and faced towards the first friendly flame 218. At operation 306, the optical accessory 104 may be positioned in the first position such that the flame detector 102 receives the reflected IR waves 226. The at least one processor 106 may be commanded to collect the first set of data. The reflected IR waves 226 may be received from the first friendly flame 218 by the flame detector 102.

At operation 308, the optical accessory 104 may be positioned in the second position such that the flame detector 102 receives the direct IR waves 226. The at least one processor 106 may be commanded to collect the second set of data. The direct IR waves 226 may be received from the first friendly flame 218. At operation 310, the optical accessory 104 may be pointed towards the second friendly flame 222. At operation 312, the operations 302-310 may be repeated for the second friendly flame 222. In some embodiments, the operations 302-310 may be repeated for the third friendly flame 224 and other one or more friendly flames. At operation 314, the flame detector 102 may be trained with the first set of data and the second set of data and the ML model 112 may be stored in the memory 108 of the flame detector 102. The ML model 112 may be stored in the memory 108 to determine the presence of the unfriendly flame or the absence of the unfriendly flame within the FOV of the flame detector 102.

Referring to FIG. 3B, the monitoring mode of the flame detector 102 may activate the operational state of the flame detector 102. In the operational state, the flame detector 102 may continuously scan the environment for determining the presence or absence of unfriendly flames based on the training in the training mode.

At operation 318, the optical accessory 104 may be removed and the flame detector 102 may be put into the monitoring mode. At operation 320, the flame detector 102 may process a data of the plurality of IR sensors continuously. The data may correspond to the first set of data and the second set of data indicative of the received IR waves 226 from the monitoring zone. At operation 322, the data may be processed by the IR signal processing unit 110 and the at least one processor 106 to detect the flame. Simultaneous to the operation 322, the data may be fed to the ML model 112 that classifies the data based on the one or more parameters of the ML model 112 and threshold of the ML model 112, at operation 324. The classification of the data may help to determine the presence or absence of unfriendly flames based on learning of the training data set 116 in the training mode.

At operation 326, the at least one processor 106 may provide the output of the IR signal processing unit 110 as the flame, based on the processed data. At operation 328, an output of the ML model 112 may be provided as the direct IR waves 226 or the reflected IR waves 226 to provide the output 118 as the absence of the unfriendly flame, when reflected infrared waves are obtained.

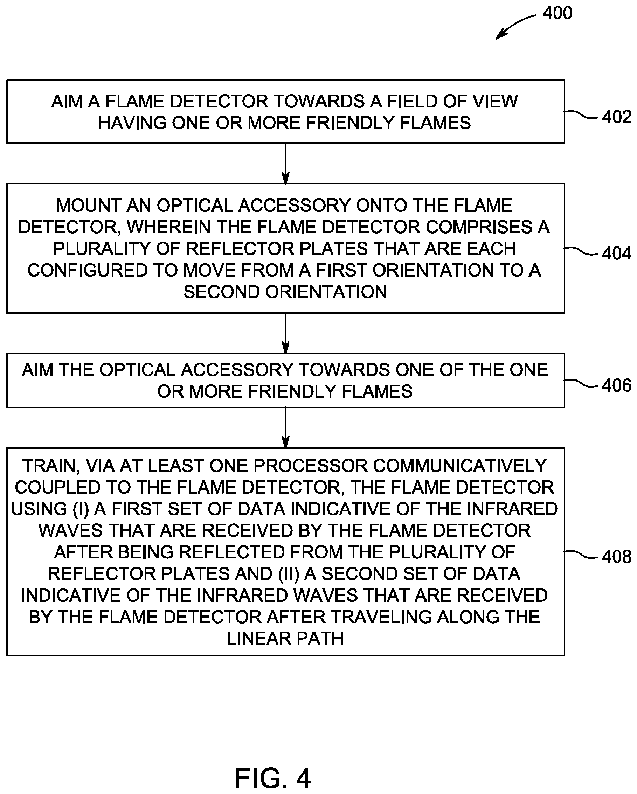

FIG. 4 illustrates a flowchart showing a method 400 of the system for training the flame detector 102, in accordance with an example embodiment of the present disclosure. FIG. 4 is described in conjunction with FIGS. 1-3B.

At operation 402, the flame detector 102 may be aimed towards the FOV having the one or more friendly flames. For example, the flame detector 102 is aimed towards the FOV having the first friendly flame 218. At operation 404, the optical accessory 104 may be mounted onto the flame detector 102, wherein the flame detector 102 comprises the plurality of reflector plates 208 that are each configured to move from the first orientation to the second orientation, and vice-versa. In some embodiments, the optical accessory 104 may have the body 202 having the tubular shape that narrows the area of the field of view that is sensed by the flame detector 102. The tubular shape may correspond to the conical shape, the cylindrical shape, or the frustum shape. In some embodiments, the optical accessory 104 may further comprise the at least one switch. The at least one switch may be configured to toggle the plurality of reflector plates 208 between the first orientation and the second orientation. Further, the at least one switch may correspond to at least one of the mechanical switch or the electrical switch. For example, the optical accessory 104 is mounted onto the flame detector 102 aimed towards the FOV having the first friendly flame 218.

At operation 406, the optical accessory 104 may be aimed towards one of the one or more friendly flames. In some embodiments, when each reflector plate is positioned in the first orientation, the plurality of reflector plates 208 may be configured to receive the infrared waves from the one of the one or more friendly flames and reflect the infrared waves towards the flame detector 102. In some embodiments, when each reflector plate is positioned in the second orientation, the plurality of reflector plates 208 may be configured to allow the infrared waves from the one of the one or more friendly flames to travel along the linear path to the flame detector 102. For example, the optical accessory 104 is aimed towards the FOV having the first friendly flame 218

At operation 408, the at least one processor 106, communicatively coupled to the flame detector 102, may be configured to train the flame detector 102 using the first set of data indicative of the infrared waves that are received by the flame detector 102 after being reflected from the plurality of reflector plates 208 and the second set of data indicative of the infrared waves that are received by the flame detector 102 after traveling along the linear path. In some embodiments, training, via the at least one processor 106 communicatively coupled to the flame detector 102, the flame detector 102 may comprise using the ML model 112 having the one or more parameters based at least on the first set of data and the second set of data. The one or more parameters may comprise at least one of the amplitudes, the ratio, the power spectral density, the ratio of the power spectral density, the rise time, the fall time, the ratios of the rise time and the fall time, the growing/quenching patterns, the peaks, the troughs, the moving average, the symmetry, the lack of symmetry around centre of distribution of the infrared waves, the heavy tailed or light tailed relative to the normal distribution of the infrared waves. For example, the at least one processor 106 trains the flame detector 102 using the ML model 112, a first set of data generated that is an indicative of the IR waves 226 that are received by the flame detector 102, from the first friendly flame 218, after being reflected from the plurality of reflector plates 208, and a second set of data generated that is an indicative of the IR waves 226 that are received by the flame detector 102, from the first friendly flame 218, after traveling along the linear path.

In some embodiments, the method may further comprise determining the presence of the unfriendly flame or the absence of the unfriendly flame within the field of view of the flame detector 102. For example, the at least one processor 106 determines an absence of an unfriendly flame in an oil refinery, based on the training using the first friendly flame 218. As will be appreciated in light of the present disclosure, the one or more parameters from the first set of data, which may be indicative of the infrared waves that are received by the flame detector 102 after being reflected from the plurality of reflector plates (i.e., reflected IR waves 226), may be similar to, or the same as, one or more parameters from a reflection of a known or friendly frame. As such, when the system 100 is in a monitoring mode, the at least one processor 106 may determine an absence of an unfriendly flame based on the similarity of the parameters of received IR waves as compared to the parameters of the first set of data. Similarly, the one or more parameters from the second set of data, which may be indicative of the infrared waves that are received by the flame detector 102 after traveling along the linear path (i.e., direct IR waves 226) may be similar to, or the same as, one or more parameters from an unfriendly flame. As such, when the system 100 is in a monitoring mode, the at least one processor 106 may determine a presence of an unfriendly flame based on the similarity of the parameters of received IR waves as compared to the parameters of the second set of data.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An optical accessory for training a flame detector, the optical accessory comprising:
a body defining a first opening and a second opening, the first opening and the second opening being positioned at opposite ends of the body; and
a plurality of reflector plates positioned within and moveably coupled to the body, each reflector plate being configured to move from a first orientation to a second orientation relative to the body,
wherein when each reflector plate is positioned in the first orientation, the plurality of reflector plates are configured to receive infrared waves from the first opening of the body and reflect the infrared waves towards the second opening of the body, and
wherein when each reflector plate is positioned in the second orientation, the plurality of reflector plates are configured to allow infrared waves to travel along a linear path from the first opening to the second opening of the body.

2. The optical accessory of claim 1, wherein the body of the optical accessory has a conical shape, a cylindrical shape, or a frustum shape.

3. The optical accessory of claim 1, further comprising at least one switch, wherein the at least one switch is configured to toggle the plurality of reflector plates between the first orientation and the second orientation.

4. The optical accessory of claim 3, wherein the at least one switch corresponds to at least one of a mechanical switch or an electrical switch.

5. A system for training a flame detector, the system comprising:
an optical accessory mounted onto the flame detector, the optical accessory comprising:
a body defining a first opening and a second opening, the first opening and the second opening being positioned at opposite ends of the body; and
a plurality of reflector plates positioned within and moveably coupled to the body, each reflector plate being configured to move from a first orientation to a second orientation relative to the body,
wherein when each reflector plate is positioned in the first orientation, the plurality of reflector plates are configured to receive infrared waves from the first opening of the body and reflect the infrared waves towards the second opening of the body and towards the flame detector, and
wherein when each reflector plate is positioned in the second orientation, the plurality of reflector plates are configured to allow infrared waves to travel along a linear path from the first opening to the second opening of the body and to the flame detector; and
at least one processor communicatively coupled to the flame detector, wherein the at least one processor is configured to train the flame detector using (i) a first set of data indicative of the infrared waves that are received by the flame detector after being reflected from the plurality of reflector plates and (ii) a second set of data indicative of the infrared waves that are received by the flame detector after traveling along the linear path.

6. The system of claim 5, wherein the at least one processor is configured to train the flame detector using a machine learning (ML) model having one or more parameters based at least on the first set of data and the second set of data.

7. The system of claim 6, wherein the one or more parameters comprise at least one of amplitudes, ratio, power spectral density, ratio of the power spectral density, rise time, fall time, ratios of the rise time and the fall time, growing/quenching patterns, peaks, troughs, moving average, symmetry, lack of symmetry around centre of distribution of the infrared waves, heavy tailed or light tailed relative to a normal distribution of the infrared waves.

8. The system of claim 5, wherein the at least one processor is further configured to determine a presence of an unfriendly flame or an absence of an unfriendly flame within a field of view of the flame detector.

9. The system of claim 5, wherein the body of the optical accessory has a tubular shape.

10. The system of claim 9, wherein the tubular shape is a conical shape, a cylindrical shape, or a frustum shape.

11. The system of claim 5, wherein the optical accessory further comprises at least one switch, wherein the at least one switch is configured to toggle the plurality of reflector plates between the first orientation and the second orientation.

12. The system of claim 11, wherein the at least one switch corresponds to at least one of a mechanical switch or an electrical switch.

13. A method for training a flame detector, the method comprising:
aiming the flame detector towards a field of view having one or more friendly flames;
mounting an optical accessory onto the flame detector, wherein the flame detector comprises a plurality of reflector plates that are each configured to move from a first orientation to a second orientation;
aiming the optical accessory towards one of the one or more friendly flames,
wherein when each reflector plate is positioned in the first orientation, the plurality of reflector plates are configured to receive infrared waves from the one of the one or more friendly flames and reflect the infrared waves towards the flame detector, and
wherein when each reflector plate is positioned in the second orientation, the plurality of reflector plates are configured to allow infrared waves from the one of the one or more friendly flames to travel along a linear path to the flame detector; and
training, via at least one processor communicatively coupled to the flame detector, the flame detector using (i) a first set of data indicative of the infrared waves that are received by the flame detector after being reflected from the plurality of reflector plates and (ii) a second set of data indicative of the infrared waves that are received by the flame detector after traveling along the linear path.

14. The method of claim 13, wherein training, via the at least one processor communicatively coupled to the flame detector, the flame detector using a machine learning (ML) model having one or more parameters based at least on the first set of data and the second set of data.

15. The method of claim 14, wherein the one or more parameters comprise at least one of amplitudes, ratio, power spectral density, ratio of the power spectral density, rise time, fall time, ratios of the rise time and the fall time, growing/quenching patterns, peaks, troughs, moving average, symmetry, lack of symmetry around centre of distribution of the infrared waves, heavy tailed or light tailed relative to a normal distribution of the infrared waves.
